(19) Europäisches Patentamt
European Patent Office
Office européen des brevets

(11) EP 4 036 171 B1

(12) **EUROPEAN PATENT SPECIFICATION**

(45) Date of publication and mention of the grant of the patent:
**19.04.2023 Bulletin 2023/16**

(21) Application number: **21843864.6**

(22) Date of filing: **21.07.2021**

(51) International Patent Classification (IPC):
***C08L 71/12*** (2006.01) ***C08L 25/06*** (2006.01)
***C08K 5/00*** (2006.01) ***C08K 5/49*** (2006.01)
***C08K 9/04*** (2006.01) ***C08K 3/34*** (2006.01)
***C08K 3/30*** (2006.01)

(52) Cooperative Patent Classification (CPC):
(C-Sets available)
**C08L 71/12;** C08K 2003/3045; C08K 2201/003

(Cont.)

(86) International application number:
**PCT/KR2021/009378**

(87) International publication number:
**WO 2022/124513 (16.06.2022 Gazette 2022/24)**

(54) **THERMOPLASTIC RESIN COMPOSITION, METHOD FOR PRODUCING SAME, AND MOLDED PRODUCT MANUFACTURED THEREFROM**

THERMOPLASTISCHE HARZZUSAMMENSETZUNG, VERFAHREN ZUM HERSTELLEN DAVON UND UNTER VERWENDUNG DAVON HERGESTELLTER FORMARTIKEL

COMPOSITION DE RÉSINE THERMOPLASTIQUE, PROCÉDÉ DE PRODUCTION DE CELLE-CI ET PRODUIT MOULÉ FABRIQUÉ À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2020 KR 20200172032**
**20.07.2021 KR 20210094849**

(43) Date of publication of application:
**03.08.2022 Bulletin 2022/31**

(73) Proprietor: **LG Chem, Ltd.**
**Seoul 07336 (KR)**

(72) Inventors:
- **CHOI, Gi Dae**
**Daejeon 34122 (KR)**
- **KIM, Hyuntae**
**Daejeon 34122 (KR)**
- **HAM, Myong Jo**
**Daejeon 34122 (KR)**
- **HAM, Hyeseung**
**Daejeon 34122 (KR)**
- **KIM, Jinseon**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2019/180592** **WO-A1-2019/180592**
**KR-A- 20170 066 102** **KR-A- 20170 066 102**
**KR-A- 20170 081 600** **KR-A- 20170 081 600**
**KR-A- 20190 117 383** **KR-A- 20190 117 383**
**KR-B1- 101 466 277** **KR-B1- 101 466 277**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 71/12, C08K 3/346, C08L 51/04**

## Description

[Technical Field]

[Cross-Reference to Related Applications]

This application claims priority to Korean Patent Application No. 10-2020-0172032, filed on December 10, 2020, and Korean Patent Application No. 10-2021-0094849, re-filed on July 20, 2021, based on the priority of the above patent, in the Korean Intellectual Property office.

The present invention relates to a thermoplastic resin composition, a method of preparing the same, and a molded article including the same, and more particularly, to a thermoplastic resin composition having excellent mechanical properties, such as impact strength and tensile strength, heat resistance, electrical insulation, and flame retardancy; a method of preparing the thermoplastic resin composition; and a molded article including the thermoplastic resin composition.

[Background Art]

A polyarylene ether resin is a thermoplastic resin having high glass transition temperature, high dimensional stability, lower specific gravity, good hydrolytic stability, and good mechanical performance. However, when polyarylene is used alone, a high processing temperature is required, which deteriorates molding properties. Accordingly, polyaryle ether is mixed with rubber-reinforced polystyrene containing rubber, which is an aromatic vinyl-based polymer, and this mixture is used. In particular, a polyphenylene ether resin containing rubber-reinforced polystyrene has compatibility in a wide range regardless of the content of each component. That is, the properties of the polyphenylene ether resin are complementary to those of other components. In addition, polyphenylene ether resins have excellent mechanical properties. With these advantages, polyphenylene ether resins are widely used in various products used under high-temperature environments, for example, automobile parts, electric and electronic parts, and building materials. In addition, glass fiber-reinforced polyarylene ether resins are used in products requiring high flexural modulus and flexural strength.

However, in general, a molded article manufactured using a polyarylene ether resin has excellent physical properties, such as impact strength and tensile strength, appearance, and heat resistance, but has a drawback in that the polyarylene ether resin is combustible. Injectionmolded products manufactured by molding the polyarylene ether resin are generally used for final products that generate a lot of heat, such as electrical/electronic products, e.g., computer housings and TV deflectors, and other office equipment. Accordingly, a polyarylene ether resin composition is essentially required to be flame retardant. As the most commonly known method used to impart flame retardancy to a resin, there is a method of adding a halogen-based compound and an antimony-based compound to a resin. As the halogen-based compound, polybromodiphenyl ether, tetrabromobisphenol A, bromine-substituted epoxy compounds, and chlorinated polyethylene are mainly used. As the antimony-based compound, antimony trioxide and antimony pentoxide are mainly used. This method of imparting flame retardancy by simultaneously applying a halogen compound and an antimony compound has advantages such as easy securing of flame retardancy and prevention of deterioration of physical properties. However, hydrogen halide gas generated during processing may be harmful to the human body. Halogen-free flame retardants are called non-halogen flame retardants, and the most widely used non-halogen flame retardants are phosphorus flame retardants containing phosphorus. However, the phosphorus flame retardants have flame retardancy significantly inferior to halogen-containing flame retardants. Thus, an excess of a phosphorus flame retardant should be introduced to increase flame retardancy, resulting in deterioration in the physical properties of a resin composition.

In addition, to achieve electrical insulation properties required for automobile parts, electric and electronic parts, etc., a method of adding additives for imparting electrical insulation is used. In this case, mechanical properties such as impact strength may be degraded.

Therefore, a thermoplastic resin composition having excellent mechanical properties, heat resistance, electrical insulation, and flame retardancy needs to be developed.

[Related Art Documents]

[Patent Documents]

Japanese Application Pub. No. hei 2-187456

KR20190117383A discloses a thermoplastic resin composition, comprising 72.7 wt% of poly(p-phenylene oxide), 8 wt% of a styrene ethylene butylene styrene copolymer and one organophosphorus flame retardant.

[Disclosure]

[Technical Problem]

Therefore, the present invention has been made in view of the above problems, and it is one object of the present invention to provide a thermoplastic resin composition having excellent mechanical properties, such as impact strength and tensile strength, heat resistance, electrical insulation, and flame retardancy.
It is another object of the present invention to provide a method of preparing the thermoplastic resin composition.
It is yet another object of the present invention to provide a molded article manufactured using the thermoplastic resin composition.
The above and other objects can be accomplished by the present invention described below.

[Technical Solution]

In accordance with one aspect of the present invention, provided is a thermoplastic resin composition including 100 parts by weight of a base resin including 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); 0.5 to 3.5 parts by weight of pulverized mica (d); 1 to 4 parts by weight of an alkaline earth metal sulfate (e); and 1 to 5 parts by weight of a polyfunctional reactant (f).
In accordance with another aspect of the present invention, provided is a thermoplastic resin composition including 100 parts by weight of a base resin including 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); and 0.5 to 3.5 parts by weight of pulverized mica (d), wherein, when electrical insulation properties are measured using an injection specimen (size: 50 mm × 50 mm × 3 mm) according to ASTM D3638, the thermoplastic resin composition has a tracking resistance of 255 volt or more.
In addition, the present invention may provide a thermoplastic resin composition including 100 parts by weight of a base resin including 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); 0.5 to 3.5 parts by weight of pulverized mica (d); 1 to 4 parts by weight of an alkaline earth metal sulfate (e); and 1 to 5 parts by weight of a polyfunctional reactant (f), wherein the two or more types of organophosphorus flame retardants (b) having different phosphorus contents include an organophosphorus flame retardant (b-1) containing 5 to 15 % by weight of phosphorus and an organophosphorus flame retardant (b-2) containing 20 to 35 % by weight of phosphorus.
In accordance with still another aspect of the present invention, provided is a method of preparing a thermoplastic resin composition, the method including kneading and extruding 100 parts by weight of a base resin including 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); 0.5 to 3.5 parts by weight of pulverized mica (d); 1 to 4 parts by weight of barium sulfate (e); and 1 to 5 parts by weight of a polyfunctional reactant (f), wherein the kneading and extrusion are performed using an extruder equipped with 9 or more kneading blocks.
In accordance with still another aspect of the present invention, provided is a method of preparing a thermoplastic resin composition, the method including preparing a thermoplastic resin composition by kneading and extruding 100 parts by weight of a base resin including 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); and 0.5 to 3.5 parts by weight of pulverized mica (d), wherein the kneading and extrusion are performed using an extruder equipped with 9 or more kneading blocks, and when electrical insulation properties are measured using an injection specimen (size: 50 mm × 50 mm × 3 mm) according to ASTM D3638, the prepared thermoplastic resin composition has a tracking resistance of 255 volt or more.
In addition, the present invention may provide a method of preparing a thermoplastic resin composition, the method including kneading and extruding 100 parts by weight of a base resin including 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); 0.5 to 3.5 parts by weight of pulverized mica (d); 1 to 4 parts by weight of barium sulfate (e); and 1 to 5 parts by weight of a polyfunctional reactant (f), wherein the kneading and extrusion are performed using an extruder equipped with 9 or more kneading blocks, and the two or more types of organophosphorus flame retardants (b) having different phosphorus contents include an organophosphorus flame retardant (b-1) containing 5 to 15 % by weight of

phosphorus and an organophosphorus flame retardant (b-2) containing 20 to 35 % by weight of phosphorus.

In accordance with yet another aspect of the present invention, provided is a molded article including the thermoplastic resin composition.

[Advantageous effects]

The present invention has an effect of providing a thermoplastic resin composition having excellent mechanical properties, such as impact strength and tensile strength, heat resistance, electrical insulation, and flame retardancy, thus being suitable for use in the manufacture of highquality electrical/electronic parts, battery parts, and the like that require electrical stability; a method of preparing the thermoplastic resin composition; and a molded article including the thermoplastic resin composition.

[Description of Drawings]

FIG. 1 schematically illustrates an extruder equipped with 9 or more kneading blocks for preparing the thermoplastic resin composition of the present invention.

[Best mode]

Hereinafter, a thermoplastic resin composition, a method of preparing the same, and a molded article including the same according to the present invention will be described in detail.

The present inventors confirmed that, when two or more types of organophosphorus flame retardants having different phosphorus contents, organoclay, pulverized mica, alkaline earth metal sulfate, and a polyfunctional reactant were added in a predetermined ratio to a base resin including a polyarylene ether resin and a polystyrene resin, a thermoplastic resin composition having excellent impact strength, tensile strength, heat resistance, electrical insulation, and flame retardancy was obtained. Based on these results, the present inventors conducted further studies to complete the present invention.

The thermoplastic resin composition of the present invention includes 100 parts by weight of a base resin including 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); 0.5 to 3.5 parts by weight of pulverized mica (d); 1 to 4 parts by weight of an alkaline earth metal sulfate (e); and 1 to 5 parts by weight of a polyfunctional reactant (f). In this case, the thermoplastic resin composition may have excellent mechanical properties, such as impact strength and tensile strength, heat resistance, electrical insulation, and flame retardancy.

As another example, the thermoplastic resin composition of the present invention includes 100 parts by weight of a base resin including 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); and 0.5 to 3.5 parts by weight of pulverized mica (d), wherein, when electrical insulation properties are measured using an injection specimen (size: 50 mm × 50 mm × 3 mm) according to ASTM D3638, the thermoplastic resin composition has a tracking resistance of 255 volt or more. In this case, the thermoplastic resin composition may have excellent mechanical properties, such as impact strength and tensile strength, heat resistance, electrical insulation, and flame retardancy.

Hereinafter, each component of the thermoplastic resin composition of the present invention will be described in detail.

**(a-1) Polyarylene ether resin**

For example, based on 100 parts by weight of the base resin, the polyarylene ether resin (a-1) may be included in an amount of 50 to 95 % by weight, preferably 55 to 90 % by weight, more preferably 60 to 85 % by weight, still more preferably 65 to 82 % by weight, still more preferably 67 to 82 % by weight. Within this range, mechanical properties and heat resistance may be excellent.

For example, the polyarylene ether resin (a-1) may be a homopolymer or a copolymer including the unit represented by Chemical Formula 1 or 2 below.

[Chemical Formula 1]

$$-[Ar(R_1R_2R_3R_4)-O]-$$

[Chemical Formula 2]

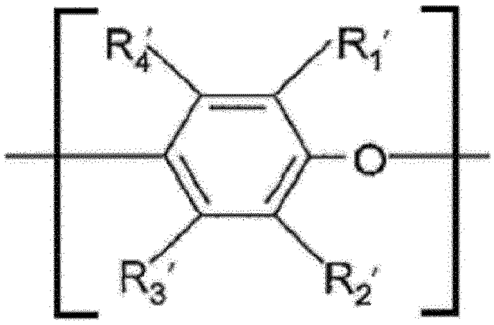

$R_1$, $R_2$, $R_3$, $R_4$, $R_1'$, $R_2'$ $R_3'$ , and $R_4'$ are substituents of an arylene group (Ar) or a phenylene group, and are each independently or simultaneously hydrogen, chlorine, bromine, iodine, alkyl, allyl, phenyl, alkylbenzyl, chloroalkyl, bromoalkyl, cyanoalkyl, cyano, alkoxy, phenoxy, or a nitro group. Ar is an arylene group having 7 to 20 carbon atoms, and alkoxy may be alkoxy having 1 to 4 carbon atoms.

Preferably, $R_1$, $R_2$, $R_3$, $R_4$, $R_1'$, $R_2'$ $R_3'$ , and $R_4'$ are substituents of an arylene group (Ar) or a phenylene group, and are each independently or simultaneously hydrogen, chlorine, bromine, iodine, methyl, ethyl, propyl, allyl, phenyl, methylbenzyl, chloromethyl, bromomethyl, cyanoethyl, cyano, methoxy, phenoxy, or a nitro group. Ar is an arylene group having 7 to 20 carbon atoms.

For example, the polyarylene ether resin (a-1) may be a polyphenylene ether resin.

As a specific example, a homopolymer of the polyarylene ether resin (a-1) may include one or more selected from the group consisting of poly(2,6-dimethyl-1,4-phenylene) ether, poly(2,6-diethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dimethoxy-1,4-phenylene)ether, poly(2,6-dichloromethyl-1,4-phenylene) ether, poly(2,6-dibromomethyl-1,4-phenylene) ether, poly(2,6-diphenyl-1,4-phenylene) ether, and poly(2,5-dimethyl-1,4-phenylene) ether. In this case, mechanical properties, such as impact strength and tensile strength, and processability may be excellent, thereby improving appearance.

In addition, as a specific example, a copolymer of the polyarylene ether resin may include one or more selected from the group consisting of a copolymer of 2,6-dimethylphenol and 2,3,6-trimethylphenol, a copolymer of 2,6-dimethylphenol and o-cresol, and a copolymer of 2,3,6-trimethylphenol and o-cresol. In this case, mechanical properties, such as impact strength and tensile strength, and processability may be excellent, thereby improving appearance.

For example, the polyarylene ether resin (a-1) may have a number average molecular weight of 10,000 to 100,000 g/mol, preferably 10,000 to 70,000 g/mol, more preferably 15,000 to 45,000 g/mol. Within this range, processability and physical property balance may be excellent.

In this description, unless otherwise defined, number average molecular weight may be measured using gel permeation chromatography (GPC, Waters Breeze). As a specific example, number average molecular weight may be measured using chloroform as an eluate through gel permeation chromatography (GPC, Waters Breeze). In this case, number average molecular weight is obtained as a relative value to a polystyrene (PS) standard sample. As a specific measurement example, number average molecular weight may be measured under conditions of solvent: chloroform, column temperature: 40 °C, flow rate: 0.3 ml/min, sample concentration: 20 mg/ml, injection amount: 5 μl, column model: 1× PLgel 10 μm MiniMix-B (250 × 4.6 mm) + 1× PLgel 10 μm MiniMix-B (250 × 4.6 mm) + 1× PLgel 10 μm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, the polyarylene ether resin (a-1) may have an intrinsic viscosity of 0.2 to 0.8 dl/g, preferably 0.3 to 0.6 dl/g, more preferably 0.35 to 0.5 dl/g. Within this range, mechanical properties of a composition, such as impact strength and tensile strength, may be maintained at a high level, fluidity suitable for molding may be secured, and compatibility with a polystyrene resin may be excellent.

In this description, unless noted otherwise, when intrinsic viscosity is measured, a sample to be measured is dissolved in chloroform as a solvent to a concentration of 0.5 g/dl, and then the intrinsic viscosity of the sample is

measured at 25 °C using an Ubbelohde viscometer.

The polyarylene ether resin (a-1) is preferably in flake or powder form. In this case, mechanical properties, such as impact strength and tensile strength, processability, and appearance may be excellent.

In this description, a flake means a flake shape including a wide range of scales and granules, and as a specific example, may be a scale having a depth of 1 to 20 μm and a length of 0.05 to 1 mm. As another example, the flake may be a flake having a ratio (L/D) of length to depth of 1.5 to 500, preferably 2 to 100, more preferably 10 to 50.

The flake shape of the present invention may be prepared by a conventional flake preparation method.

In this description, the depth and length of the flake may be measured by microscopy analysis.

The powder form may be prepared by a powder preparation method commonly known in the art.

**(a-2) Polystyrene resin**

For example, based on 100 parts by weight of the base resin, the polystyrene resin (a-2) may be included in an amount of 5 to 50 % by weight, preferably 10 to 45 % by weight, more preferably 15 to 40 % by weight, still more preferably 18 to 35 % by weight, still more preferably 18 to 33 % by weight. Within this range, mechanical properties such as impact strength and tensile strength may be excellent.

For example, the polystyrene resin (a-2) may be a general purpose polystyrene resin, a high-impact polystyrene resin, or a mixture thereof, preferably a high-impact polystyrene resin. In this case, processability, dimensional stability, and tensile strength may be excellent.

For example, the general purpose polystyrene resin may be a polymer prepared by polymerizing styrene alone. In this case, processability may be excellent.

For example, the high-impact polystyrene resin may be a rubber-reinforced polystyrene resin.

For example, the rubber may include one or more selected from the group consisting of butadiene-based rubber, isoprene-based rubber, copolymers of butadiene and styrene, and alkyl acrylate rubber, preferably butadiene. In this case, impact strength may be improved.

For example, based on 100 % by weight of the high-impact polystyrene resin, the rubber may be included in an amount of 3 to 25 % by weight, preferably 6 to 14 % by weight, more preferably 8 to 12 % by weight. Within this range, impact strength and fluidity may be excellent.

For example, the rubber may have a volume average particle diameter of 0.1 to 20 pm, preferably 1 to 15 μm. Within this range, impact strength and fluidity may be excellent.

The rubber-reinforced polystyrene resin preferably includes one or more selected from the group consisting of high-impact styrene-butadiene (HIPS) copolymers, styrene-butadiene-styrene (SBS) copolymers, styrene-ethylenebutylene-styrene (SEBS) copolymers, styrene-butadiene (SB) copolymers, styrene-isoprene (SI) copolymers, styrene-isoprene-styrene (SIS) copolymers, alpha-methylstyrenebutadiene copolymers, styrene-ethylene-propylene copolymers, styrene-ethylene-propylene-styrene copolymers, and styrene-(ethylene-butylene/styrene copolymer)-styrene copolymers.

For example, the rubber-reinforced polystyrene resin may be prepared by polymerizing rubber and an aromatic vinyl compound using bulk polymerization, suspension polymerization, emulsion polymerization, or a mixture thereof. In this case, polymerization may be performed in the presence of a thermal polymerization initiator or a polymerization initiator. For example, the polymerization initiator may be a peroxide-based initiator, an azo-based initiator, or a mixture thereof. The peroxide-based initiator preferably includes one or more selected from the group consisting of benzoylperoxide, t-butyl hydroperoxide, acetyl peroxide, and cumene hydroperoxide, and the azo-based initiator is preferably azobis isobutyronitrile.

In this description, when volume average particle diameter is measured, 3 g of a high-impact polystyrene resin is dissolved in 100 ml of methyl ethyl ketone using a Coulter Counter LS230, and then the volume average particle diameter of non-dissolved and dispersed rubber particles in particulate form is measured using a laser scattering method.

For example, the polystyrene resin may have a melt flow index of 2 to 20 g/10 min, preferably 3 to 15 g/10 min as measured at 200 °C under 5 kg according to ASTM D1238. Within this range, processability and physical property balance may be excellent.

**(b) Two or more types of organophosphorus flame retardants having different phosphorus contents**

For example, based on 100 parts by weight of the base resin, the two or more types of organophosphorus flame retardants (b) having different phosphorus contents may be included in an amount of 8.5 to 16 parts by weight, preferably 9 to 15 parts by weight, more preferably 10 to 15 parts by weight, still more preferably 10 to 14 parts by weight. In this case, flame retardancy and mechanical properties may be excellent.

For example, the two or more types of organophosphorus flame retardants (b) having different phosphorus contents may include an organophosphorus flame retardant (b-1) containing 5 to 15 % by weight of phosphorus and an

organophosphorus flame retardant (b-2) containing 20 to 35 % by weight of phosphorus, preferably an organophosphorus flame retardant (b-1) containing 7 to 12 % by weight of phosphorus and an organophosphorus flame retardant (b-2) containing 22 to 30 % by weight of phosphorus. In this case, flame retardancy may be further improved while reducing the content of a flame retardant. In addition, when a specimen is exposed at 60 °C for 7 days, and then flame retardancy is measured, flame retardancy may be excellent. In addition, impact resistance may be excellent.

In this description, phosphorus content means the content (% by weight) of phosphorus converted from the molecular weight of phosphorus contained in the molecular structure of an organophosphorus flame retardant.

For example, the weight ratio of the organophosphorus flame retardant (b-1) to the organophosphorus flame retardant (b-2) (b-1:b-2) may be 1.5:1 to 4.5:1, preferably 1.5:1 to 4:1, more preferably 2:1 to 4:1, still more preferably 2.5:1 to 4:1. Within this range, when a specimen is exposed at 60 °C for 7 days, and then flame retardancy is measured, flame retardancy may be excellent. In addition, mechanical strength may be excellent.

For example, the two or more types of organophosphorus flame retardants (b) having different phosphorus contents may include one or more selected from the group consisting of phosphate ester compounds, phosphate-based flame retardants, pyrophosphate-based flame retardants, phosphonate-based flame retardants, metal-substituted phosphinate-based flame retardants, phosphanatebased flame retardants, and metal phosphates.

For example, the phosphate ester compound may be a phosphate compound having an alkyl group or an aromatic group, and preferably includes one or more selected from the group consisting of triphenyl phosphate, tricresyl phosphate, trixylenyl phosphate, cresyl diphenyl phosphate, octyl diphenyl phosphate, bisphenol A diphosphate, and an aromatic diphosphate represented by Chemical Formula 3 below, more preferably bisphenol A bis(diphenyl phosphate). In this case, flame retardancy may be excellent, and mechanical properties and appearance properties may be improved.

[Chemical Formula 3]

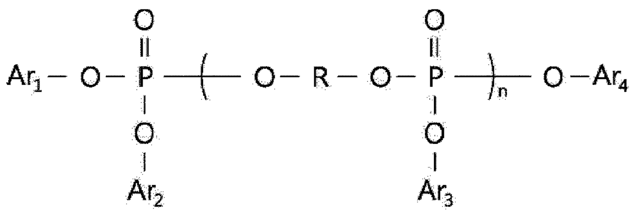

In Chemical Formula 3, $Ar_1$, $Ar_2$, $Ar_3$, and $Ar_4$ may be the same or different from each other, and may be independently selected from a phenyl group or an aryl group in which 1 to 3 alkyl groups having 1 to 4 carbon atoms are substituted. R may be phenyl or bisphenol-A, and n is an integer of 1 to 5. For example, the aryl group may be an aryl group having 6 to 25 carbon atoms, preferably 6 to 20 carbon atoms, more preferably 6 to 15 carbon atoms, still more preferably 6 to 12 carbon atoms.

For example, the metal-substituted phosphinate may include one or more selected from the group consisting of calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methanedi(methylphosphinate), magnesium methane di(methylphosphinate), aluminum methanedi(methylphosphinate), zinc methane di(methylphosphinate), calcium benzene-1,4-(dimethylphosphinate), magnesium benzene-1,4-(dimethylphosphinate), aluminum benzene-1,4-(dimethylphosphinate), zinc benzene-1,4-(dimethylphosphinate), calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate.

Preferably, the metal-substituted phosphinate includes one or more selected from the group consisting of aluminum dimethylphosphinate, aluminum ethylmethylphosphinate, and aluminum diethylphosphinate, more preferably aluminum diethylphosphinate. In this case, when a specimen is exposed at 60 °C for 7 days, and flame retardancy is measured, flame retardancy may be excellent.

The metal-substituted phosphinate preferably has a particle diameter of 1 to 50 pm, more preferably 1 to 20 μm or 30 to 50 μm. In this case, the flame retardant and the resin may be uniformly mixed, thereby further improving flame retardancy.

In this description, particle diameter may be measured by a measurement method commonly used in the art to which the present invention pertains, such as electron microscopy analysis.

For example, the metal phosphate may be aluminum phosphate, zinc phosphate, or a mixture thereof. Preferably, the metal phosphate is aluminum dialkylphosphate, zinc dialkylphosphate, or a mixture thereof.

The organophosphorus flame retardant (b-1) containing 5 to 15 % by weight of phosphorus is preferably bisphenol A diphenylphosphate, and the organophosphorus flame retardant (b-2) containing 20 to 35 % by weight of phosphorus is preferably aluminum diethyl phosphinate.

**(c) Organoclay**

For example, based on 100 parts by weight of the base resin, the organoclay (c) may be included in an amount of 0.5 to 3 parts by weight, preferably 1 to 2.5 parts by weight, more preferably 1 to 2 parts by weight. Within this range, heat resistance may be excellent while maintaining mechanical properties, processability, and the like at high levels.

In this description, organoclay refers to nanoclay prepared by interaction between unfunctionalized clay and one or more intercalants.

For example, the organoclay (c) may be organic nanoclay.

The nanoclay has a layered structure in which plate-shaped silicate is laminated on a nanometer scale. For example, each layer may have a thickness of 1 to 50 nm, preferably 2 to 40 nm.

The thickness of the nanoclay may be measured using a method, such as electron microscope analysis, commonly used in the art to which the present invention pertains, and as a specific example, may be measured by dynamic light scattering.

For example, the nanoclay may include one or more selected from the group consisting of smectite-based clay, kaolinite-based clay, and illite-based clay. Preferably, the nanoclay includes one or more selected from the group consisting of montmorillonite, saponite, hectorite, vermiculite, Kaolinite, and hydromica, more preferably montmorillonite. In this case, heat resistance may be further improved.

For example, based on a total weight of the organoclay (c), the organoclay (c) may include 1 to 45 % by weight, preferably 5 to 40 % by weight, more preferably 10 to 35 % by weight of an organic modifier. In this case, compatibility with a resin composition may be improved, thereby further increasing heat resistance.

For example, the organic modifier may include one or more selected from the group consisting of tetra alkyl ammonium salts, tetraalkyl phosphonium salts, and ammonium salts containing alkyl and aryl. Preferably, the organic modifier includes one or more selected from the group consisting of dimethyl benzyl hydrogenated tallow quaternary ammonium, dimethyl hydrogenated tallow quaternary ammonium, methyl tallow bis-2-hydroxyethyl quaternary ammonium, and dimethyl hydrogenated tallow 2-ethylhexyl quaternary ammonium. In this case, heat resistance may be further improved.

As a preferred example, the organoclay includes montmorillonite including methyl tallow bis-2-hydroxyethyl quaternary ammonium. In this case, heat resistance may be excellent while maintaining mechanical properties, electrical insulation, and processability at high levels.

**(d) Pulverized mica**

For example, based on 100 parts by weight of the base resin, the pulverized mica (d) may be included in an amount of 0.5 to 3.5 parts by weight, preferably 0.7 to 3 parts by weight, more preferably 1 to 2.5 parts by weight, still more preferably 1 to 2 parts by weight. Within this range, impact resistance, heat resistance, and insulation properties may be excellent.

In this description, the pulverized mica may be defined as pulverized mica having an average particle diameter of 500 μm or less obtained by pulverizing mica at least once.

For example, the pulverized mica (d) may have an average particle diameter of 50 to 150 pm, preferably 70 to 130 μm. Within this range, compatibility with a resin may be excellent, thereby improving impact resistance, heat resistance, flame retardancy, and insulation properties. In addition, a molded article having excellent appearance may be manufactured.

For example, the pulverized mica (d) may have an average aspect ratio of 40 to 60, preferably 45 to 55. Within this range, a molded article having excellent appearance may be manufactured.

The aspect ratio refers to a ratio between the length of a long axis and the length of a short axis in a two-dimensional model.

In this description, the average particle diameter and average aspect ratio of pulverized mica may be measured by microscopy analysis. At this time, 30 pieces of pulverized mica are measured, and the average value thereof is calculated.

**(e) Alkaline earth metal sulfate**

For example, based on 100 parts by weight of the base resin, the alkaline earth metal sulfate (e) may be included

in an amount of 1 to 4 parts by weight, preferably 1 to 3.5 parts by weight, more preferably 1 to 3 parts by weight. Within this range, insulation properties may be improved, and impact resistance may be excellent.

For example, the alkaline earth metal sulfate (e) may have an average particle diameter of 0.05 to 3 pm, preferably 0.1 to 2.5 pm, more preferably 0.5 to 2 μm. Within this range, due to excellent compatibility, mechanical properties, insulation properties, and flame retardancy may be improved

In this description, average particle diameter may be measured using a method, such as electron microscopy analysis, commonly used in the art to which the present invention pertains. Specifically, the diameters of 30 particles may be measured, and then the average value thereof may be calculated.

For example, the alkaline earth metal of the alkaline earth metal sulfate (e) may include one or more selected from the group consisting of elements included in group II of the periodic table. Preferably, the alkaline earth metal of the alkaline earth metal sulfate (e) includes one or more selected from the group consisting of calcium, barium, strontium, and magnesium, more preferably calcium, barium, or a mixture thereof, still more preferably barium. In this case, mechanical properties and insulation properties may be improved.

As a preferred example, the alkaline earth metal sulfate (e) may be barium sulfate. In this case, mechanical properties and insulation properties may be improved.

**(f) Polyfunctional reactant**

For example, based on 100 parts by weight of the base resin, the polyfunctional reactant (f) may be included in an amount of 1 to 5 parts by weight, preferably 1.5 to 4.5 parts by weight, more preferably 1.8 to 4 parts by weight, still more preferably 2 to 3.5 parts by weight. Within this range, mechanical properties, such as tensile strength and impact strength, insulation properties, heat resistance, and flame retardancy may be excellent.

In this description, the polyfunctional reactant refers to a reactant including one or more functional groups selected from the group consisting of a carboxyl group, an amine group, a hydroxyl group, a maleic acid group, and an epoxy group.

For example, the polyfunctional reactant (f) may be an epoxy-based resin, and preferably includes one or more selected from the group consisting of bisphenol A-type epoxy resins, hydrogenated bisphenol A-type epoxy resins, brominated bisphenol A-type epoxy resins, bisphenol F-type epoxy resins, bisphenol S-type epoxy resins, novolac-type epoxy resins, phenol novolac-type epoxy resins, cresol novolac-type epoxy resins, N-glycidyl-type epoxy resins, bisphenol A novolac-type epoxy resins, bixylenol-type epoxy resins, biphenol-type epoxy resins, chelate-type epoxy resins, glyoxal-type epoxy resins, amino group-containing epoxy resins, rubber-modified epoxy resins, dicyclopentadiene phenolic epoxy resins, diglycidyl phthalate resins, heterocyclic epoxy resins, tetraglycidyl xylenoyl ethane resins, silicon-modified epoxy resins, and ε-caprolactone-modified epoxy resins. More preferably, the polyfunctional reactant (f) include one or more selected from the group consisting of novolac-type epoxy resins, phenol novolac-type epoxy resins, and cresol novolac-type epoxy resins, still more preferably cresol novolac-type epoxy resins. In this case, mechanical properties, such as tensile strength and impact strength, insulation properties, heat resistance, and flame retardancy may be excellent.

For example, the epoxy resin may have an average epoxy equivalent of 150 to 250 g/eq, preferably 170 to 230 g/eq, more preferably 190 to 220 g/eq. In this case, a resin composition may be uniformly dispersed, and compatibility may be improved, thereby improving electrical insulation and mechanical properties.

In this description, the average epoxy equivalent means an average molecular weight per one epoxy group.

In this description, when epoxy equivalent (g/eq) is measured, at room temperature, an appropriate amount of a sample is placed in an idle Erlenmeyer flask, and 20 ml of 1,4-dioxane is added thereto to dissolve the sample. When the sample is completely dissolved, 5 ml of HCl is added dropwise. After 30 minutes, a Cresol Red indicator is added, and titration is performed using a NaOH solution. During titration, a point that changes from pink to yellow and then to purple is taken as an endpoint. At the same time, a blank test is performed. Then, epoxy equivalent is calculated by Equation 1 below.

[Equation 1]

$$EEW\ (g/eq) = [Sample\ weight/(B-A)] \times 1000$$

A = Amount of titrant solution consumed during sample titration
B = Amount of titrant solution consumed during blank experiment

For example, the epoxy-based resin may have an ICI viscosity of 1,000 to 3,000 cps, preferably 1,800 to 2,800

cps. Within this range, physical properties such as processability and flame retardancy may be excellent.

In this description, ICI viscosity may be measured at 170 °C using an ICI viscometer.

For example, the epoxy-based resin may have a softening point of 70 to 90 °C, preferably 75 to 85 °C. Within this range, heat resistance may be further improved.

In this description, a softening point may be measured at a temperature increasing rate of 2 °C using a FP90/FP83HT device (Mettler Toledo Co.).

## Thermoplastic resin composition

When electrical insulation properties are measured using an injection specimen (size: 50 mm × 50 mm × 3 mm) according to ASTM D3638, the thermoplastic resin composition of the present invention preferably has a tracking resistance of 255 volt or more, more preferably 290 volt or more, still more preferably 320 volt or more, still more preferably 320 to 400 volt, still more preferably 330 to 380 volt, still more preferably 340 to 370 volt. Within this range, physical property balance, flame retardancy, mechanical properties, and electrical insulation may be excellent.

In this description, tracking resistance may be measured using an injection specimen having a size of 50 mm × 50 mm × 3 mm according to ASTM D3638. Specifically, tracking resistance is measured using tracking resistance equipment (M31, PTI GmbH Co.) according to ASTM D3638. At this time, a 0.1 % (1 g/1 L water) ammonium chloride solution is dropped every 30 seconds. When 50 drops fall, a short-cut voltage is measured.

The thermoplastic resin composition preferably has a flame retardancy of at least V-0 grade as measured using an injection specimen having a size of 127 mm × 12.7 mm × 1.5 mm according to a UL 94 standard (vertical burning test). In this case, physical property balance, heat resistance, mechanical properties, and insulation properties may be excellent.

When an injection specimen having a size of 127 mm × 12.7 mm × 1.5 mm is placed in a 60 °C oven for 7 days, and then flame retardancy is evaluated according to a UL 94 standard (vertical burning test), the thermoplastic resin composition preferably has a flame retardant stability of at least V-0 grade. In this case, physical property balance may be excellent, and flame retardancy may be maintained at high temperatures.

The thermoplastic resin composition preferably has a tensile strength of 50 MPa or more, more preferably 50 to 60 MPa, still more preferably 51 to 58 MPa, still more preferably 53 to 57 MPa as measured according to ASTM D638. Within this range, physical property balance, flame retardancy, heat resistance, and insulation properties may be excellent.

In this description, tensile strength may be measured at cross head speed of 5 mm/min using U.T.M (product name: 4466, manufacturer: Instron) according to ISO 527.

The thermoplastic resin composition preferably has a Notched Izod impact strength of 160 J/m or more, more preferably 165 J/m or more, still more preferably 170 to 220 J/m, still more preferably 175 to 210 J/m, still more preferably 180 to 210 J/m as measured 23 °C using a specimen having a thickness of 4 mm according to ISO 180A. Within this range, physical property balance, heat resistance, flame retardancy, and insulation properties may be excellent.

In this description, Notched Izod impact strength is measured using a notched specimen and using IT (Toyoseiki Co.) under constant temperature and humidity standard conditions according to ISO 180A.

The thermoplastic resin composition preferably has a heat deflection temperature of 128 °C or higher, more preferably 135 °C or higher, still more preferably 140 °C or higher, still more preferably 140 to 150 °C as measured using a specimen having a thickness of 4 mm under a stress of 45 MPa according to ISO 75-2. Within this range, physical property balance, flame retardancy, mechanical properties, and insulation properties may be excellent.

When necessary, based on 100 parts by weight of the base resin, the thermoplastic resin composition may further include 0.001 to 5 parts by weight, preferably 0.01 to 3 parts by weight, more preferably 0.05 to 2 parts by weight of each of one or more additives selected from the group consisting of an impact modifier, a flame retardant supplement, a lubricant, a plasticizer, a heat stabilizer, an anti-dripping agent, an antioxidant, a compatibilizer, a light stabilizer, a pigment, a dye, an inorganic additive (except glass fiber), glass fiber, and carbon fiber. Within this range, required physical properties may be efficiently expressed without degrading the intrinsic properties of the thermoplastic resin composition of the present invention.

## Method of preparing thermoplastic resin composition

A method of preparing the thermoplastic resin composition of the present invention preferably includes a step of kneading and extruding 100 parts by weight of a base resin including 50 to 95 % by weight of a polyarylene ether resin (a-1) and 5 to 50 % by weight of a polystyrene resin (a-2), 8.5 to 16 parts by weight of two or more types of organophosphorus flame retardants (b) having different phosphorus contents, 0.5 to 3 parts by weight of organoclay (c), 0.5 to 3.5 parts by weight of pulverized mica (d), 1 to 4 parts by weight of barium sulfate (e), and 1 to 5 parts by weight of a polyfunctional reactant (f), wherein the kneading and extrusion are performed using an extruder equipped

with 9 or more kneading blocks. In this case, mechanical properties, such as impact strength and tensile strength, heat resistance, electrical insulation, and flame retardancy may be excellent.

As another example, the method of preparing the thermoplastic resin composition of the present invention includes a step of preparing a thermoplastic resin composition by kneading and extruding 100 parts by weight of a base resin including 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); and 0.5 to 3.5 parts by weight of pulverized mica (d), wherein the kneading and extrusion are performed using an extruder equipped with 9 or more kneading blocks, and when electrical insulation properties are measured using an injection specimen (size: 50 mm × 50 mm × 3 mm) according to ASTM D3638, the prepared thermoplastic resin composition has a tracking resistance of 255 volt or more. In this case, mechanical properties, such as impact strength and tensile strength, heat resistance, electrical insulation, and flame retardancy may be excellent.

For example, the kneading and extrusion may be performed at a barrel temperature of 230 to 330 °C, preferably 240 to 320 °C, more preferably 250 to 310 °C. In this case, throughput per unit time may be increased, meltkneading may be sufficiently performed, and thermal decomposition of resin components may be prevented.

For example, the kneading and extrusion may be performed at a screw rotation rate of 100 to 500 rpm, preferably 150 to 400 rpm, more preferably 200 to 350 rpm. Within this range, throughput per unit time may be increased, and process efficiency may be increased.

The thermoplastic resin composition obtained by kneading and extrusion is preferably provided in the form of pellets.

## Molded article

A molded article of the present invention includes the thermoplastic resin composition of the present invention. In this case, mechanical properties, such as impact strength and tensile strength, heat resistance, electrical insulation, and flame retardancy may be excellent.

For example, the molded article may be formed by injection molding or extrusion molding.

For example, the molded article may be used as an electrical/electronic product or a battery component.

A method of manufacturing a molded article of the present invention preferably includes a step of preparing thermoplastic resin composition pellets by kneading and extruding 100 parts by weight of a base resin including 50 to 95 % by weight of a polyarylene ether resin (a-1) and 5 to 50 % by weight of a polystyrene resin (a-2), 8.5 to 16 parts by weight of two or more types of organophosphorus flame retardants (b) having different phosphorus contents, 0.5 to 3 parts by weight of organoclay (c), 0.5 to 3.5 parts by weight of pulverized mica (d), 1 to 4 parts by weight of barium sulfate (e), and 1 to 5 parts by weight of a polyfunctional reactant (f) and a step of manufacturing a molded article by injecting the prepared pellets, wherein the kneading and extrusion are performed using an extruder equipped with 9 or more kneading blocks. In this case, a molded article having excellent appearance, mechanical properties, flame retardancy, heat resistance, and insulation properties may be provided. Due to these advantageous features, when the molded article is exposed to external environments, change in insulation properties of the molded article may be minimized.

In this description, without particular limitation, injection may be performed according to methods and conditions commonly used in the art to which the present invention pertains.

In describing the thermoplastic resin composition, the molded article, the method of preparing the thermoplastic resin composition, and the method of manufacturing the molded article, unless specified otherwise, other conditions (for example, the configuration and specifications of an extruder and an injection machine, extrusion and injection conditions, additives, and the like) may be appropriately selected and implemented as needed when the conditions are within the range commonly practiced in the art, without particular limitation.

Hereinafter, the present invention will be described with reference to FIG. 1.

FIG. 1 below schematically illustrates an extruder equipped with 9 or more kneading blocks for preparing the thermoplastic resin composition of the present invention.

The type of extruder is not particularly limited, and an extruder commonly used in the art may be appropriately selected and used. For example, a singlescrew extruder equipped with one screw or a multi-screw extruder equipped with a plurality of screws may be used. Considering uniform kneading of materials, ease of processing, and economic efficiency, a twin-screw extruder equipped with two screws is preferably used.

The extruder includes a raw material feeder for feeding materials into a barrel, a screw for conveying and kneading the fed materials, and a die for extruding the kneaded materials. In this case, the screw consists of a plurality of screw elements for various functions.

In the extruder, one or more raw material feeders may be provided, and two or more raw material feeders may be provided, as needed. In addition, a main inlet may be provided, and two or more auxiliary inlets may be optionally

provided.

As a specific example, the base resin, the two or more types of organophosphorus flame retardants having different phosphorus contents, the organoclay, the pulverized mica, the alkaline earth metal sulfate, and the polyfunctional reactant may be fed into the main inlet batchwise. As another example, all components except for the two or more types of organophosphorus flame retardants having different phosphorus contents may be fed into the main inlet, and the two or more types of organophosphorus flame retardants having different phosphorus contents may be fed into the auxiliary inlets.

As another example, all components except for the two or more types of organophosphorus flame retardants having different phosphorus contents may be fed into the main inlet, the two or more types of organophosphorus flame retardants having different phosphorus contents may be fed into the auxiliary inlet 1, and additives, such as an impact modifier, a flame retardant supplement, glass fiber, carbon fiber, a lubricant, a plasticizer, and a light stabilizer, may be fed into the auxiliary inlet 2.

As another example, the base resin and the polyfunctional reactant may be fed into the main inlet, a portion of the two or more types of organophosphorus flame retardants having different phosphorus contents, the organoclay, the pulverized mica, and the alkaline earth metal sulfate may be fed into the auxiliary inlet 1, and the remainder may be fed into the auxiliary inlet 2.

As another example, the base resin may be fed into the main inlet, the two or more types of organophosphorus flame retardants having different phosphorus contents, the organoclay, the pulverized mica, and the alkaline earth metal sulfate may be fed into the auxiliary inlet 1, and the polyfunctional reactant may be fed into the auxiliary inlet 2.

The kneading blocks of the present invention correspond to the screw elements. Specifically, each kneading block consists of a plurality of discs, preferably 3 to 7 discs, 5 to 7 discs, 3 to 5 discs, or 4 to 5 discs, and has a polygonal cross section or an elliptical cross section. The kneading blocks are arranged continuously in a direction in which materials are conveyed. In addition, in the kneading block, the phase angle of the discs (indicating the travel angle between discs) is preferably 45 to 90°.

In addition, the kneading block includes a forward kneading block capable of conveying, distributing, and mixing materials, a neutral kneading block capable of distributing and mixing materials without conveying the same, and a backward kneading block capable of conveying materials in a direction opposite to the conveying direction.

For example, the thermoplastic resin composition according to the present invention may be prepared using a method including a step of performing kneading and extrusion using an extruder equipped with 9 or more, preferably 10 or more, more preferably 12 or more kneading blocks, as a preferred example, 9 to 18 kneading blocks, as a more preferred example, 10 to 18 kneading blocks, as a still more preferred example, 12 to 16 kneading blocks. In this case, it may be effective to arrange the kneading blocks in the order of forward kneading blocks, neutral kneading blocks, and backward kneading blocks with respect to a resin flow direction. Depending on combination manners, a continuous or separate block combination may be used. In this case, the dispersibility of organoclay and pulverized mica and the compatibility of a composition may be further improved, thereby providing a high-quality thermoplastic resin composition.

9 or more kneading blocks may be arranged continuously, or may be arranged discontinuously between screws. As a specific example, 3 to 6 kneading blocks may be provided continuously between the main inlet and the auxiliary inlet 1, 3 to 8 kneading blocks may be provided continuously between the auxiliary inlet 1 and the auxiliary inlet 2, and 2 to 5 kneading blocks may be provided between the auxiliary inlet 2 and an outlet (not shown). With this configuration, local heat generation during melt-kneading may be controlled to prevent thermal deformation of raw materials. In addition, excessive cutting of nanoscale components may be prevented, thereby preventing deterioration in electrical insulation and physical properties.

Hereinafter, the present invention will be described in more detail with reference to the following preferred examples. However, these examples are provided for illustrative purposes only and should not be construed as limiting the scope of the present invention. In addition, it will be apparent to those skilled in the art that various changes and modifications may be made without departing from the scope of the present invention, defined by the claims.

[Examples]

Components used in Examples and Comparative Examples below are as follows.

* (a-1) Polyarylene ether resin: Poly(2,6-dimethyl-1,4-phenylene) ether (LXR040, Bluestar Co.)
* (a-2) Polystyrene resin: HIPS resin (SF510, LG Chemical Co.)
* (b) Two or more types of organophosphorus flame retardants having different phosphorus contents: (b-1) bisphenol A diphenylphosphate (BPADA, FCA Co.) containing 9 % by weight of phosphorus and (b-2) aluminum diethyl phosphinate (OP1230, Clariant Co.) containing 25 % by weight of phosphorus
* (c) Organoclay: Nanosilicate (30B, SCP Co.) (organized with methyl tallow bis-2-hydroxyethyl quaternary ammonium)

* (d) Pulverized mica: Pulverized mica (200D, Kurary Co.) having an average particle diameter of 90 μm and an aspect ratio of 50
* (e) Alkaline earth metal sulfate: Barium sulfate (HD80, Solvay Co.) having an average particle diameter of 1μm
* (f) Polyfunctional reactant: Novolac-type epoxy resin (YDCN-500-8P, epoxy equivalent: 200 to 212 g/eq, softening point: 68 to 75 °C, Kukdo Chemical Co.)

Examples 1 to 8 and Comparative Examples 1 to 11

According to the contents shown in Tables 1 and 2 below, a polyarylene ether resin (a-1), a polystyrene resin (a-2), an organophosphorus flame retardant (b-1) containing 9 % by weight of phosphorus, an organophosphorus flame retardant (b-2) containing 25 % by weight of phosphorus, organoclay (c), pulverized mica (d), alkaline earth metal sulfate (e), and a polyfunctional reactant (f) were fed into a twin-screw extruder equipped with 10 mixing blocks (T40, SM Co.). Then, melt-kneading and extrusion were performed at a temperature of 250 to 310 °C and a rotation rate of 300 rpm to prepare pellets. The obtained pellets were injected using an injection machine (80 tons, Engel Co.) to prepare a specimen for evaluation. The obtained specimen was allowed to stand at room temperature (20 to 26 °C) for 48 hours, and the physical properties thereof were measured. The obtained results are shown in Tables 1 and 2 below.

The twin-screw extruder had a total of two or more inlets. Components except for the organophosphorus flame retardant were fed into the main inlet, and the organophosphorus flame retardant was fed into the auxiliary inlets.

[Test Examples]

The properties of specimens prepared in Examples 1 to 8 and Comparative Examples 1 to 11 were measured according to the following methods, and the results are shown in Tables 1 and 2 below.

Measurement methods

* Tensile strength (MPa): When a specimen was pulled at a cross head speed of 5 mm/min using U.T.M (product name: 4466, manufacturer: Instron) according to ISO 527 and the specimen was cut, a cut point in the specimen was measured.
* Izod impact strength (J/m): Impact strength was measured using an IT device (Toyoseiki Co.) under constant temperature and humidity standard conditions according to ISO 180A. At this time, a notched specimen having a thickness of 4 mm was used.
* Heat deflection temperature (°C): Heat deflection temperature was measured using a specimen having a thickness of 4 mm under a stress of 45 MPa according to ISO 75-2.
* Tracking resistance (volt): According to ASTM D3638, the tracking resistance of an injection specimen was measured as electrical insulation properties. Specifically, an injection specimen having a size of 50 mm × 50 mm × 3 mm was prepared. Then, tracking resistance was measured using tracking resistance equipment (M31, PTI GmbH Co.) according to ASTM D3638. At this time, a 0.1 % ammonium chloride solution was dropped every 30 seconds. When 50 drops fell, a short-cut voltage was measured.
* Flame retardancy: Flame retardancy was measured using an injection specimen having a size of 127 mm × 12.7 mm × 1.5 mm according to UL 94 standard (vertical burning test) .
* Flame retardant stability: An injection specimen having a size of 127 mm × 12.7 mm × 1.5 mm was placed in a 60 °C oven for 7 days, and then flame retardancy was measured according to a UL 94 standard (vertical burning test). Based on flame retardancy, flame retardant stability was evaluated. As flame retardancy grade increases, flame retardant stability increases.

[Table 1]

| Classification | Examples | | | | | | | |
|---|---|---|---|---|---|---|---|---|
| | 1 | 2 | 3 | 4 | 5 | 6 | 7 | 8 |
| (a-1) PPE | 60 | 70 | 80 | 80 | 70 | 70 | 80 | 90 |
| (a-2) HIPS | 40 | 30 | 20 | 20 | 30 | 30 | 20 | 10 |
| (b-1) Flame retardant containing low phosphorus content | 10 | 10 | 8 | 8 | 9 | 12 | 9 | 8 |

(continued)

| Classification | Examples | | | | | | | |
|---|---|---|---|---|---|---|---|---|
| | 1 | 2 | 3 | 4 | 5 | 6 | 7 | 8 |
| (b-2) Flame retardant containing high phosphorus content | 5 | 4 | 2 | 2 | 6 | 3 | 6 | 2 |
| (c) Organoclay | 2 | 2 | 1 | 1 | 2 | 2 | 1 | 1 |
| (d) Pulverized mica | 2 | 3 | 2 | 1 | 3 | 3 | 2 | 2 |
| (e) Small | 2 | 3 | 1 | 2 | 3 | 3 | 1 | 2 |
| particle diameter barium sulfate | | | | | | | | |
| (f) Polyfunctional reactant | 2 | 3 | 2 | 3 | 3 | 3 | 2 | 2 |
| Physical properties | | | | | | | | |
| Tensile strength (MPa) | 50 | 52 | 55 | 52 | 54 | 50 | 56 | 57 |
| Impact strength (J/m) | 180 | 200 | 170 | 180 | 190 | 210 | 170 | 190 |
| Heat deflection temperature (°C) | 130 | 141 | 145 | 147 | 144 | 135 | 141 | 148 |
| Tracking resistance (volt) | 350 | 375 | 325 | 350 | 375 | 350 | 325 | 300 |
| Flame retardancy (UL94) | V0 | V0 | V0 | V0 | V0 | V0 | V0 | V0 |
| Flame retardant stability (UL94) | V0 | V0 | V0 | V0 | V0 | V0 | V0 | V0 |

[Table 2]

| Classification | Comparative Examples | | | | | | | | | | |
|---|---|---|---|---|---|---|---|---|---|---|---|
| | 1 | 2 | 3 | 4 | 5 | 6 | 7 | 8 | 9 | 10 | 11 |
| (a-1) PPE | 60 | 60 | 70 | 70 | 80 | 80 | 80 | 70 | 70 | 70 | 70 |
| (a-2) HIPS | 40 | 40 | 30 | 30 | 20 | 20 | 20 | 30 | 30 | 30 | 30 |
| (b-1) Flame retardant containing low phosphorus content | 17 | - | 10 | 10 | 8 | 8 | 8 | 10 | 10 | 10 | 10 |
| (b-2) Flame retardant containing high phosphorus content | - | 7 | 4 | 4 | 2 | 2 | 2 | 4 | 4 | 4 | 4 |
| (c) Organoclay | 2 | 2 | - | 2 | 1 | 1 | 1 | 4 | 2 | 2 | 2 |
| (d) Pulverized mica | 2 | 2 | 3 | - | 1 | 1 | 1 | 3 | 4 | 3 | 3 |
| (e) Small particle diameter barium sulfate | 2 | 2 | 3 | 3 | - | 2 | 2 | 3 | 3 | 5 | 3 |
| (f) Polyfunctional reactant | 2 | 2 | 3 | 3 | 3 | - | 6 | 3 | 3 | 3 | 6 |
| Physical properties | | | | | | | | | | | |
| Tensile strength (MPa) | 47 | 51 | 52 | 51 | 47 | 43 | 49 | 52 | 51 | 52 | 49 |
| Impact strength (J/m) | 95 | 100 | 120 | 130 | 135 | 87 | 110 | 100 | 90 | 95 | 130 |
| Heat deflection temperature (°C) | 93 | 120 | 125 | 120 | 130 | 125 | 130 | 125 | 124 | 123 | 118 |
| Tracking resistance (volt) | 200 | 225 | 225 | 225 | 175 | 200 | 225 | 200 | 225 | 250 | 225 |
| Flame retardancy (UL94) | V2 | V1 | V2 | V1 | V1 | V2 | V1 | V1 | V1 | V1 | V1 |
| Flame retardant stability (UL94) | HB | V2 | V2 | V2 | V2 | HB | HB | V2 | V1 | V2 | V2 |

As shown in Tables 1 and 2, compared to Comparative Examples 1 and 11, the thermoplastic resin compositions

according to the present invention (Examples 1 to 8) have excellent mechanical properties, such as tensile strength and impact strength, heat deflection temperature, flame retardancy, flame retardant stability, and tracking resistance. Specifically, in the case of Comparative Examples 1 and 2 in which one type of phosphorus flame retardant is included, tensile strength, impact strength, heat deflection temperature, tracking resistance, flame retardancy, and flame retardant stability are all poor.

In addition, in the case of Comparative Example 3 not including the organoclay (c) and Comparative Example 4 not including the pulverized mica (d), impact strength, heat deflection temperature, and flame retardancy are reduced. In particular, tracking resistance is significantly reduced.

In addition, in the case of Comparative Example 5 not including the barium sulfate (e), mechanical properties such as tensile strength and impact strength are degraded. In addition, flame retardancy and tracking resistance are very poor.

In addition, in the case of Comparative Examples 6 and 7 in which the polyfunctional reactant (f) is not included or the polyfunctional reactant (f) is included in an amount exceeding the range of the present invention, mechanical properties, heat resistance, and tracking resistance are deteriorated. In particular, flame retardancy and flame retardant stability are significantly degraded.

In addition, in the case of Comparative Example 8 in which the organoclay (c) is included in an amount exceeding the range of the present invention, impact strength is significantly reduced. In the case of Comparative Examples 9 and 10, in which each of the pulverized mica (d) and the barium sulfate (e), respectively, is included in an amount exceeding the range of the present invention, impact strength and heat deflection temperature are reduced. In the case of Comparative Example 11 in which the polyfunctional reactant (f) is included in an amount exceeding the range of the present invention, heat deflection temperature is decreased.

## Claims

1. A thermoplastic resin composition, comprising:

   100 parts by weight of a base resin comprising 50 to 95 % by weight of a polyarylene ether resin (a-1) and 5 to 50 % by weight of a polystyrene resin (a-2);
   8.5 to 16 parts by weight of two or more types of organophosphorus flame retardants (b) having different phosphorus contents;
   0.5 to 3 parts by weight of organoclay (c);
   0.5 to 3.5 parts by weight of pulverized mica (d);
   1 to 4 parts by weight of an alkaline earth metal sulfate (e); and
   1 to 5 parts by weight of a polyfunctional reactant (f) .

2. The thermoplastic resin composition according to claim 1, wherein the polyarylene ether resin (a-1) has an intrinsic viscosity of 0.2 to 0.8 dl/g, determined as defined in the specification.

3. The thermoplastic resin composition according to claim 1, wherein the polystyrene resin (a-2) is general purpose polystyrene, high-impact polystyrene, or a mixture thereof.

4. The thermoplastic resin composition according to claim 1, wherein the two or more types of organophosphorus flame retardants (b) having different phosphorus contents comprise an organophosphorus flame retardant (b-1) containing 5 to 15 % by weight of phosphorus and an organophosphorus flame retardant (b-2) containing 20 to 35 % by weight of phosphorus.

5. The thermoplastic resin composition according to claim 4, wherein a weight ratio of the organophosphorus flame retardant (b-1) to the organophosphorus flame retardant (b-2) (b-1:b-2) is 1.5:1 to 4.5:1.

6. The thermoplastic resin composition according to claim 1, wherein the two or more types of organophosphorus flame retardants (b) having different phosphorus contents comprise one or more selected from the group consisting of phosphate ester compounds, phosphate-based flame retardants, pyrophosphate-based flame retardants, phosphonate-based flame retardants, metal-substituted phosphinate-based flame retardants, phosphanate-based flame retardants, and metal phosphates.

7. The thermoplastic resin composition according to claim 1, wherein, based on a total weight of the organoclay (c), the organoclay (c) comprises 1 to 45 % by weight of an organic modifier.

8. The thermoplastic resin composition according to claim 1, wherein the pulverized mica (d) has an average particle diameter of 50 to 150 μm.

9. The thermoplastic resin composition according to claim 1, wherein the alkaline earth metal sulfate (e) has an average particle diameter of 0.05 to 3 μm.

10. The thermoplastic resin composition according to claim 1, wherein the polyfunctional reactant (f) comprises one or more selected from the group consisting of bisphenol A-type epoxy resins, hydrogenated bisphenol A-type epoxy resins, brominated bisphenol A-type epoxy resins, bisphenol F-type epoxy resins, bisphenol S-type epoxy resins, novolac-type epoxy resins, phenol novolac-type epoxy resins, cresol novolac-type epoxy resins, N-glycidyl-type epoxy resins, bisphenol A novolac-type epoxy resins, bixylenol-type epoxy resins, biphenol-type epoxy resins, chelate-type epoxy resins, glyoxal-type epoxy resins, amino group-containing epoxy resins, rubber-modified epoxy resins, dicyclopentadiene phenolic epoxy resins, diglycidyl phthalate resins, heterocyclic epoxy resins, tetraglycidyl xylenoyl ethane resins, silicone-modified epoxy resins, and ε-caprolactone-modified epoxy resins.

11. A thermoplastic resin composition, comprising:

100 parts by weight of a base resin comprising 50 to 95 % by weight of a polyarylene ether resin (a-1) and 5 to 50 % by weight of a polystyrene resin (a-2);
8.5 to 16 parts by weight of two or more types of organophosphorus flame retardants (b) having different phosphorus contents;
0.5 to 3 parts by weight of organoclay (c); and
0.5 to 3.5 parts by weight of pulverized mica (d),
wherein, when electrical insulation properties are measured using an injection specimen (size: 50 mm × 50 mm × 3 mm) according to ASTM D3638, the thermoplastic resin composition has a tracking resistance of 255 volt or more.

12. The thermoplastic resin composition according to claim 1 or 11, wherein the thermoplastic resin composition comprises one or more selected from the group consisting of an impact modifier, a flame retardant supplement, a lubricant, a plasticizer, a heat stabilizer, an antidripping agent, an antioxidant, a compatibilizer, a light stabilizer, a pigment, a dye, an inorganic additive (except glass fiber), glass fiber, and carbon fiber.

13. A method of preparing a thermoplastic resin composition, comprising kneading and extruding 100 parts by weight of a base resin comprising 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); 0.5 to 3.5 parts by weight of pulverized mica (d); 1 to 4 parts by weight of an alkaline earth metal sulfate (e); and 1 to 5 parts by weight of a polyfunctional reactant (f),
wherein the kneading and extrusion are performed using an extruder equipped with 9 or more kneading blocks.

14. A method of preparing a thermoplastic resin composition, comprising preparing a thermoplastic resin composition by kneading and extruding 100 parts by weight of a base resin comprising 50 to 95 % by weight of a polyarylene ether resin (a-1) and 5 to 50 % by weight of a polystyrene resin (a-2); 8.5 to 16 parts by weight of two or more types of organophosphorus flame retardants (b) having different phosphorus contents; 0.5 to 3 parts by weight of organoclay (c); and 0.5 to 3.5 parts by weight of pulverized mica (d),

wherein the kneading and extrusion are performed using an extruder equipped with 9 or more kneading blocks, and
when electrical insulation properties are measured using an injection specimen (size: 50 mm × 50 mm × 3 mm) according to ASTM D3638, the prepared thermoplastic resin composition has a tracking resistance of 255 volt or more.

15. A molded article, comprising the thermoplastic resin composition according to any one of claims 1 to 11.

## Patentansprüche

1. Thermoplastische Harzzusammensetzung, umfassend:

100 Gewichtsteile eines Basisharzes, das 50 bis 95 Gew.-% eines Polyarylenetherharzes (a-1) und 5 bis 50 Gew.-% eines Polystyrolharzes (a-2) umfasst;
8,5 bis 16 Gewichtsteile zwei oder mehrerer Arten von Organophosphorflammhemmstoffen (b) mit unterschiedlichen Phosphorgehalten;
0,5 bis 3 Gewichtsteile Organoton (c);
0,5 bis 3,5 Gewichtsteile pulverisierten Glimmer (d);
1 bis 4 Gewichtsteile eines Erdalkalimetallsulfats (e); und
1 bis 5 Gewichtsteile eines polyfunktionellen Reaktanten (f).

**2.** Thermoplastische Harzzusammensetzung nach Anspruch 1, wobei das Polyarylenetherharz (a-1) eine intrinsische Viskosität von 0,2 bis 0,8 dl/g aufweist, bestimmt wie in der Beschreibung definiert.

**3.** Thermoplastische Harzzusammensetzung nach Anspruch 1, wobei das Polystyrolharz (a-2) ein Allzweckpolystyrol, Hochschlagzähpolystyrol oder eine Mischung derselben ist.

**4.** Thermoplastische Harzzusammensetzung nach Anspruch 1, wobei die zwei oder mehr Arten von Organophosphorflammhemmstoffen (b) mit unterschiedlichen Phosphorgehalten einen Organophosphorflammhemmstoff (b-1), der 5 bis 15 Gew.-% Phosphor enthält, und einen Organophosphorflammhemmstoff (b-2), der 20 bis 35 Gew.-% Phosphor enthält, umfassen.

**5.** Thermoplastische Harzzusammensetzung nach Anspruch 4, wobei ein Gewichtsverhältnis des Organophosphorflammhemmstoffs (b-1) zu dem Organophosphorflammhemmstoff (b-2) (b-1:b-2) 1,5:1 bis 4,5:1 ist.

**6.** Thermoplastische Harzzusammensetzung nach Anspruch 1, wobei die zwei oder mehr Arten von Organophosphorflammhemmstoffen (b) mit unterschiedlichen Phosphorgehalten einen oder mehrere einschließen, ausgewählt aus der Gruppe bestehend aus Phosphatesterverbindungen, Flammhemmstoffen auf Phosphatbasis, Flammhemmstoffen auf Pyrophosphatbasis, Flammhemmstoffen auf Phosphonatbasis, Flammhemmstoffen auf Basis von Metallsubstituiertem Phosphinat, Flammhemmstoffen auf Phosphanatbasis und Metallphosphaten.

**7.** Thermoplastische Harzzusammensetzung nach Anspruch 1, wobei, basierend auf einem Gesamtgewicht des Organotons (c), der Organoton (c) 1 bis 45 Gew.-% eines organischen Modifizierungsmittels umfasst.

**8.** Thermoplastische Harzzusammensetzung nach Anspruch 1, wobei der pulverisierte Glimmer (d) einen durchschnittlichen Teilchendurchmesser von 50 bis 150 $\mu$m aufweist.

**9.** Thermoplastische Harzzusammensetzung nach Anspruch 1, wobei das Erdalkalimetallsulfat (e) einen durchschnittlichen Teilchendurchmesser von 0,05 bis 3 $\mu$m aufweist.

**10.** Thermoplastische Harzzusammensetzung nach Anspruch 1, wobei der polyfunktionelle Reaktant (f) einen oder mehrere umfasst, ausgewählt aus der Gruppe bestehend aus Bisphenol A-artigen Epoxyharzen, hydrierten Bisphenol A-artigen Epoxyharzen, bromierten Bisphenol A-artigen Epoxyharzen, Bisphenol F-artigen Epoxyharzen, Bisphenol S-artigen Epoxyharzen, Novolac-artigen Epoxyharzen, Phenolnovolac-artigen Epoxyharzen, Cresolnovolac-artigen Epoxyharzen, N-Glycidyl-artigen Epoxyharzen, Bisphenol A-Novolac-artigen Epoxyharzen, Bixylenol-artigen Epoxyharzen, Biphenol-artigen Epoxyharzen, Chelat-artigen Epoxyharzen, Glyoxal-artigen Epoxyharzen, Aminogruppeenthaltenden Epoxyharzen, Kautschuk-modifizierten Epoxyharzen, Dicyclopentadienphenol-Epoxyharzen, Diglycidylphthalatharzen, heterocyclischen Epoxyharzen, Tetraglycidylxylenoylethanharzen, Siliconmodifzierten Epoxyharzen und $\varepsilon$-Caprolacton-modifizierten Epoxyharzen.

**11.** Thermoplastische Harzzusammensetzung, umfassend:

100 Gewichtsteile eines Basisharzes, das 50 bis 95 Gew.-% eines Polyarylenetherharzes (a-1) und 5 bis 50 Gew.-% eines Polystyrolharzes (a-2) umfasst;
8,5 bis 16 Gewichtsteile zwei oder mehrerer Arten von Organophosphorflammhemmstoffen (b) mit unterschiedlichen Phosphorgehalten;
0,5 bis 3 Gewichtsteile Organoton (c); und
0,5 bis 3,5 Gewichtsteile pulverisierten Glimmer (d),
wobei, wenn elektrische Isolierungseigenschaften unter Verwendung eines Injektionsprobenkörpers (Größe: 50 mm $\times$ 50 mm $\times$ 3 mm) gemäß ASTM D3638 gemessen werden, die thermoplastische Harzzusammenset-

zung einen Kriechwiderstand von 255 Volt oder mehr aufweist.

**12.** Thermoplastische Harzzusammensetzung nach Anspruch 1 oder 11, wobei die thermoplastische Harzzusammensetzung eines oder mehrere umfasst, ausgewählt aus der Gruppe bestehend aus einem Schlagzähmodifizierungsmittel, einem Flammhemmstoffergänzungsmittel, einem Schmiermittel, einem Weichmacher, einem Wärmestabilisator, einem Antitropfmittel, einem Antioxidationsmittel, einem Kompatibilisierungsmittel, einem Lichtstabilisator, einem Pigment, einem Farbstoff, einem anorganischen Additiv (außer Glasfaser), Glasfaser und Kohlefaser.

**13.** Verfahren zum Herstellen einer thermoplastischen Harzzusammensetzung, umfassend Kneten und Extrudieren von 100 Gewichtsteilen eines Basisharzes, das 50 bis 95 Gew.-% eines Polyarylenetherharzes (a-1) und 5 bis 50 Gew.-% eines Polystyrolharzes (a-2) umfasst; 8,5 bis 16 Gewichtsteilen von zwei oder mehr Arten von Organophosphorflammhemmstoffen (b) mit unterschiedlichen Phosphorgehalten; 0,5 bis 3 Gewichtsteilen Organoton (c); 0,5 bis 3,5 Gewichtsteilen pulverisierten Glimmer (d); 1 bis 4 Gewichtsteilen eines Erdalkalimetallsulfats (e); und 1 bis 5 Gewichtsteilen eines polyfunktionellen Reaktanten (f),
wobei das Kneten und Extrudieren durchgeführt wird unter Verwendung eines Extruders, der mit 9 oder mehr Knetblöcken ausgerüstet ist.

**14.** Verfahren zum Herstellen einer thermoplastischen Harzzusammensetzung, umfassend Herstellen einer thermoplastischen Harzzusammensetzung durch Kneten und Extrudieren von 100 Gewichtsteilen eines Basisharzes, das 50 bis 95 Gew.-% eines Polyarylenetherharzes (a-1) und 5 bis 50 Gew.-% eines Polystyrolharzes (a-2) umfasst; 8,5 bis 16 Gewichtsteilen von zwei oder mehr Arten von Organophosphorflammhemmstoffen (b) mit unterschiedlichen Phosphorgehalten; 0,5 bis 3 Gewichtsteilen Organoton (c); und 0,5 bis 3,5 Gewichtsteilen pulverisierten Glimmer (d),

wobei das Kneten und Extrudieren durchgeführt wird unter Verwendung eines Extruders, der mit 9 oder mehr Knetblöcken ausgerüstet ist, und
wenn elektrische Isolierungseigenschaften gemessen werden unter Verwendung eines Injektionsprobenkörpers (Größe: 50 mm × 50 mm × 3 mm) gemäß ASTM D3638, die hergestellte thermoplastische Harzzusammensetzung einen Kriechwiderstand von 255 Volt oder mehr aufweist.

**15.** Formkörper, umfassend die thermoplastische Harzzusammensetzung nach einem der Ansprüche 1 bis 11.

## Revendications

**1.** Composition de résine thermoplastique, comprenant :

100 parties en poids d'une résine de base comprenant entre 50 et 95 % en poids d'une résine d'éther de polarylène (a-1) et entre 5 et 50 % en poids d'une résine de polystyrène (a-2) ;
entre 8,5 et 16 parties en poids de deux types ou plus de retardateurs de flamme organophosphorés (b) ayant différentes teneurs en phosphore ;
entre 0,5 et 3 parties en poids d'organoargile (c) ;
entre 0,5 et 3,5 parties en poids de mica pulvérisé (d) ;
entre 1 et 4 parties en poids d'un sulfate de métal terreux alcalin (e) ; et
entre 1 et 5 parties en poids d'un réactif polyfonctionnel (f).

**2.** Composition de résine thermoplastique selon la revendication 1, dans laquelle la résine d'éther de polarylène (a-1) a une viscosité intrinsèque comprise entre 0,2 et 0,8 dl/g, déterminée comme définie dans la spécification.

**3.** Composition de résine thermoplastique selon la revendication 1, dans laquelle la résine de polystyrène (a-2) est un polystyrène à usage général, un polystyrène choc, ou un mélange de ces derniers.

**4.** Composition de résine thermoplastique selon la revendication 1, dans laquelle les deux types ou plus de retardateurs de flamme organophosphorés (b) ayant différentes teneurs en phosphore comprennent un retardateur de flamme organophosphoré (b-1) contenant entre 5 et 15 % en poids de phosphore et un retardateur de flamme organophosphoré (b-2) contenant entre 20 et 35 % en poids de phosphore.

**5.** Composition de résine thermoplastique selon la revendication 4, dans laquelle un rapport en poids du retardateur

de flamme organophosphoré (b-1) au retardateur de flamme organophosphoré (b-2) (b-1:b-2) est compris entre 1,5:1 et 4,5:1.

6. Composition de résine thermoplastique selon la revendication 1, dans laquelle les deux types ou plus de retardateurs de flamme organophosphorés (b) ayant différentes teneurs en phosphore comprennent un ou plusieurs éléments sélectionnés dans le groupe constitué de composés d'ester de phosphate, retardateurs de flamme à base de phosphate, retardateurs de flamme à base de pyrophosphate, retardateurs de flamme à base de phosphonate, retardateurs de flamme à base de phosphinate substitué par un métal, retardateurs de flamme à base de phosphanate et phosphates métalliques.

7. Composition de résine thermoplastique selon la revendication 1, dans laquelle, sur la base d'un poids total d'organoargile (c), l'organoargile (c) comprend entre 1 et 45 % en poids d'un agent de modification organique.

8. Composition de résine thermoplastique selon la revendication 1, dans laquelle le mica pulvérisé (d) a un diamètre de particule moyen compris entre 50 et 150 $\mu$m.

9. Composition de résine thermoplastique selon la revendication 1, dans laquelle le sulfate de métal terreux alcalin (e) a un diamètre de particule moyen compris entre 0,05 et 3 $\mu$m.

10. Composition de résine thermoplastique selon la revendication 1, dans laquelle le réactif polyfonctionnel (f) comprend un ou plusieurs éléments sélectionnés dans le groupe constitué de résines époxy de type bisphénol A, résines époxy de type bisphénol A hydrogénées, résines époxy de type bisphénol A bromées, résines époxy de type bisphénol F, résines époxy de type bisphénol S, résines époxy de type novolaque, résines époxy de type novolaque phénol, résines époxy de type novolaque crésol, résines époxy de type N-glycidyle, résines époxy de type novolaque bisphénol A, résines époxy de type bixylénol, résines époxy de type biphénol, résines époxy de type chélate, résines époxy de type glyoxal, résines époxy contenant un groupe amino, résines époxy modifiées par caoutchouc, résines époxy phénoliques de dicyclopentadiène, résines de diglycidyle phtalate, résines époxy hétérocycliques, résines d'éthane tétraglycidyle xylenoyl, résines époxy modifiées par silicone et résines époxy modifiées par $\varepsilon$-caprolactone.

11. Composition de résine thermoplastique, comprenant :

100 parties en poids d'une résine de base comprenant entre 50 et 95 % en poids d'une résine d'éther de polarylène (a-1) et entre 5 et 50 % en poids d'une résine de polystyrène (a-2) ;
entre 8,5 et 16 parties en poids de deux ou plus de types de retardateurs de flamme organophosphorés (b) ayant différentes teneurs en phosphore ;
entre 0,5 et 3 parties en poids d'organoargile (c) ; et
entre 0,5 et 3,5 parties en poids de mica pulvérisé (d),
dans laquelle, lorsque les propriétés d'isolation électriques sont mesurées en utilisant un spécimen d'injection (dimensions : 50 mm $\times$ 50 mm $\times$ 3 mm) selon ASTM D3638, la composition de résine thermoplastique a une résistance au cheminement égale ou supérieure à 255 volts.

12. Composition de résine thermoplastique selon la revendication 1 ou 11, dans laquelle la composition de résine thermoplastique comprend un ou plusieurs éléments sélectionnés dans le groupe constitué d'un modificateur d'impact, un supplément de retardateur de flamme, un lubrifiant, un plastifiant, un stabilisant thermique, un agent anti-gouttes, un antioxydant, un agent de compatibilité, un stabilisant de lumière, un pigment, un colorant, un additif inorganique (sauf fibre de verre), une fibre de verre et une fibre de carbone.

13. Procédé de préparation d'une composition de résine thermoplastique, consistant à malaxer et extruder 100 parties en poids d'une résine de base comprenant entre 50 et 95 % en poids d'une résine d'éther de polarylène (a-1) et entre 5 et 50 % en poids d'une résine de polystyrène (a-2) ; entre 8,5 et 16 parties en poids de deux types ou plus de retardateurs de flamme organophosphorés (b) ayant différentes teneurs en phosphore ; entre 0,5 et 3 parties en poids d'organoargile (c) ; entre 0,5 et 3,5 parties en poids de mica pulvérisé (d) ; entre 1 et 4 parties en poids d'un sulfate de métal terreux alcalin (e) ; et entre 1 et 5 parties en poids d'un réactif polyfonctionnel (f),
dans lequel le malaxage et l'extrusion sont effectués en utilisant une extrudeuse équipée de 9 blocs de malaxage ou plus.

14. Procédé de préparation d'une composition de résine thermoplastique, consistant à préparer une composition de résine thermoplastique en malaxant et extrudant 100 parties en poids d'une résine de base comprenant entre 50

et 95 % en poids d'une résine d'éther de polarylène (a-1) et entre 5 et 50 % en poids d'une résine de polystyrène (a-2) ; entre 8,5 et 16 parties en poids de deux types ou plus de retardateurs de flamme organophosphorés (b) ayant différentes teneurs en phosphore ; entre 0,5 et 3 parties en poids d'organoargile (c) ; et entre 0,5 et 3,5 parties en poids de mica pulvérisé (d),

dans lequel le malaxage et l'extrusion sont effectués en utilisant une extrudeuse équipée de 9 blocs de malaxage ou plus, et
lorsque les propriétés d'isolation électriques sont mesurées en utilisant un spécimen d'injection (dimensions : 50 mm × 50 mm × 3 mm) selon ASTM D3638, la composition de résine thermoplastique préparée a une résistance au cheminement égale ou supérieure à 255 volts.

**15.** Article moulé comprenant la composition de résine thermoplastique selon l'une quelconque des revendications 1 à 11.

[FIG. 1]

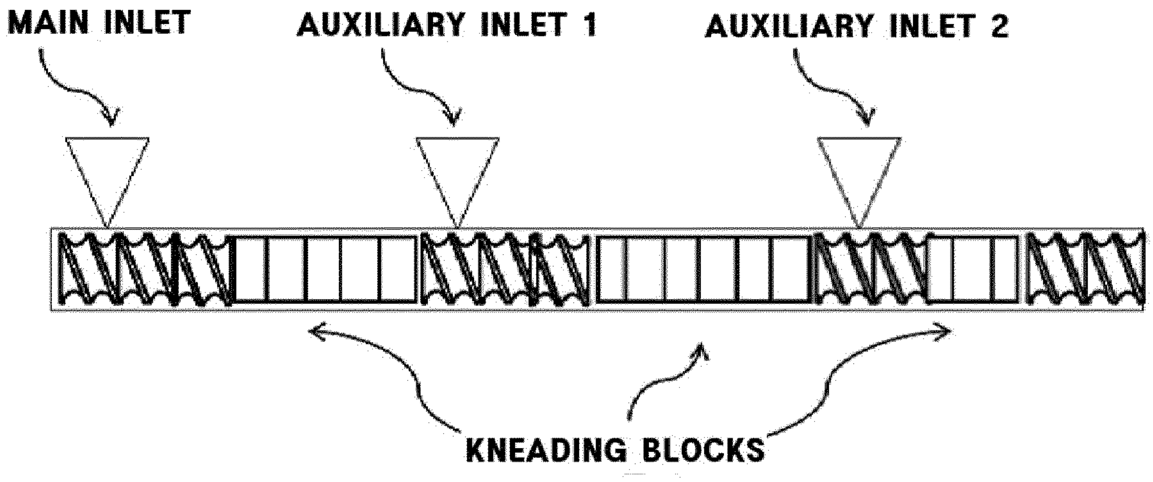
MAIN INLET
AUXILIARY INLET 1
AUXILIARY INLET 2
KNEADING BLOCKS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020200172032
- KR 1020210094849
- JP 2187456 A
- KR 20190117383 A